# EUROPEAN PATENT SPECIFICATION

(11) **EP 0 633 177 B1**
(45) Date of publication and mention of the grant of the patent: **23.10.1996**
(21) Application number: 94304847.0
(22) Date of filing: 01.07.1994
(51) Int. Cl.: B62B 7/14

(54) **Child transporter**
Kinderwagen
Poussette d'enfant

(30) Priority: 10.07.1993 GB 9314309
(43) Date of publication of application: 11.01.1995
(73) Proprietor: BRITAX-TEUTONIA KINDERWAGENFABRIK GmbH, D-32112 Hiddenhausen (DE)
(72) Inventor: Anhofer, Frank, D-33739 Bielefeld (DE)
(74) Representative: Hollinghurst, Antony

(56) References cited:
- EP-A- 0 514 054
- GB-A- 1 014 004

## Description

This invention relates to a child transporter, such as a perambulator or pushchair, of the type having a body, a chassis and a latch mechanism for detachably securing the body to the chassis, the chassis including a pair of parallel rails on which the body is supported and the latch mechanism comprising two latch members on opposite sides of the body, each latch member being adapted to engage with a respective one of the parallel rails.

EP-A-0514054 discloses a perambulator of this type in which a pair of latch members are provided on each side of the body and arranged to engage with the corresponding rail at spaced locations so as to ensure stability. Each pair of latch members is coupled to a common actuating handle on the corresponding side of the perambulator body. These handles can be used to support the perambulator body when it is being lifted off or on to the chassis, the latch members being held in their released position during such lifting operation. However the mechanism linking the handles to the latches is relatively complex. The present invention aims to provide a simpler latching mechanism which a user can hold in the released position while lifting the body from the chassis, and which retains the above mentioned stability.

According to the invention, in a child transporter of the type described above, each rail carries a pair of spaced upwardly facing oblique abutment surfaces which are inclined in opposite directions, the body carries four downwardly facing oblique abutment surfaces each positioned to abut against a respective one of said upwardly facing abutment surfaces, and a respective latch member is positioned to releasably couple the body to a corresponding rail at a location between the abutment surfaces thereon.

An embodiment of the invention will now be described, by way of example, with reference to the accompanying drawings in which:
Figure 1 is a perspective view of a plan in accordance with the invention with the body secured to the chassis;
Figure 2 is an elevational view of the latch mechanism on one side of the body with the latch plates in their engaged position;
Figure 3 is a sectional view on the line 3 - 3 in Figure 2;
Figures 4 and 5 are views corresponding to Figures 1 and 2 but with the body removed from the chassis and the latch members in their released position; and
Figure 6 is a sectional view on the line 6 - 6 in Figure 5.

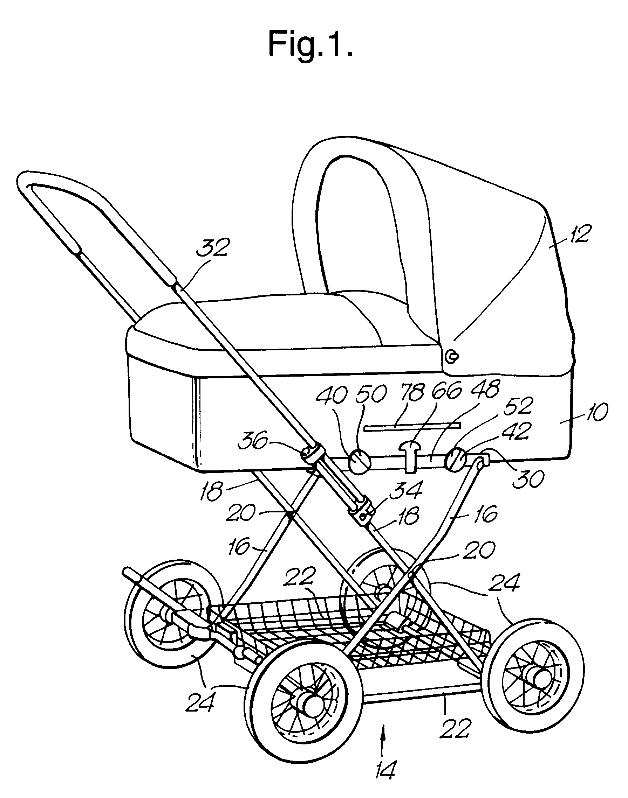

Referring to Figure 1, a perambulator has a body 10 with a hood 12 supported on a chassis 14. The chassis 14 is of known type, having a pair of side frames, each of which comprises a pair of support members 16 and 18 which are interconnected at their midpoint by a pivot joint 20. The lower ends of the support members 16 and 18 are connected by respective flexible links (not shown) to a bottom frame member 22 which has wheels 24 at each end. The support member 16 which extends upwardly from a rear wheel 24, has its upper end pivotally connected to the front end of a horizontal rail 30, the rear end of which is pivotally connected to a handle 32. The bottom end of the handle 32 is connected by a pivot joint 34 to the side member 18 at an intermediate position between its upper end and the pivot joint 20. A clip 36 secures the handle 32 parallel to the member 18 when the chassis 14 is in its erected position. Release of the catch 18 allows the handle 32 to pivot forwardly, allowing the chassis to be folded so as to bring the support member 30 closer to the base member 14. A folding chassis of this type is already known and the folding action will not be described further.

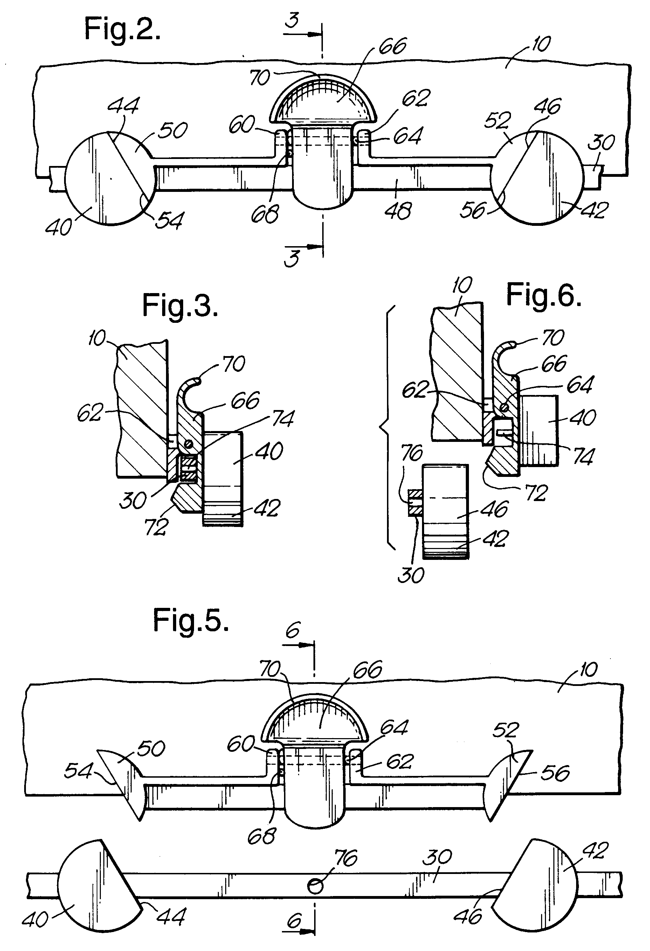

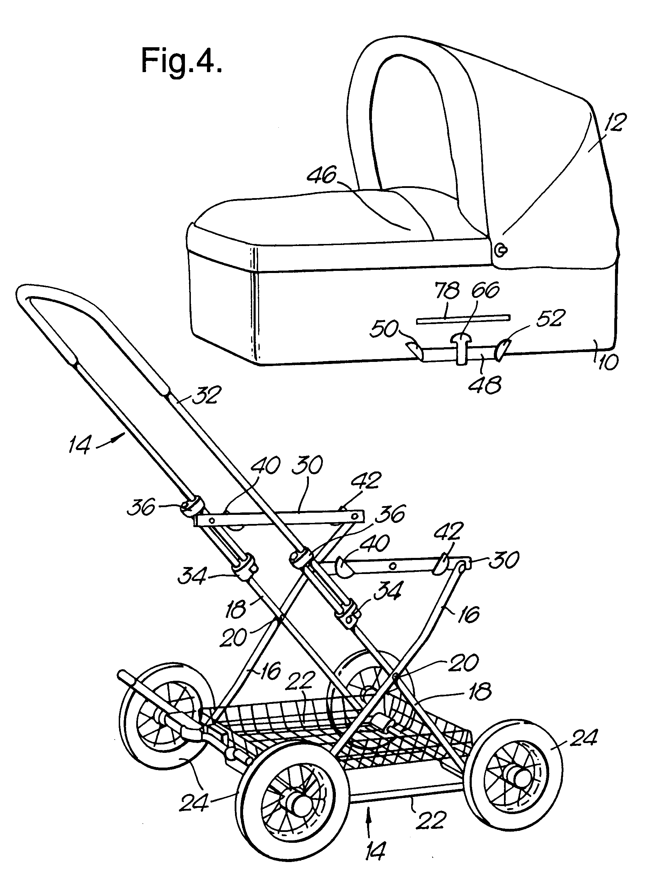

Each of the horizontal rails 30 carries a pair of spaced part-cylindrical abutment members 40 and 42. As can best be seen from Figure 5, the rear abutment member 40 on the right-hand rail 30 has an upwardly and forwardly facing flat surface 44, while the corresponding front abutment member 42 has a rearwardly and upwardly facing abutment surface 46. An auxiliary rail 48 is secured to the corresponding bottom side edge of the perambulator body 10 and has a respective part-cylindrical abutment member 50, 52 at each end. The abutment member 50 has a rearwardly and downwardly facing flat surface 54 while the abutment member 52 has a downwardly and forwardly facing abutment surface 56. When the body 10 is in position on the chassis 14, the abutment surface 44 engages with the abutment surface 54 and the abutment surface 46 with the abutment surface 56, as shown in Figure 2. The rail 48 has a pair of upstanding lugs 60 and 62 supporting a pivot pin 64 which extends parallel to the rail 48. A catch 66 is journalled on the pin 64 and biassed by a spring 68 so that a finger grip 70 on its upper end is biassed outwardly away from the body 10. On its lower end, the catch 66 has a hook formation 72 which engages round the bottom edge of the horizontal rail 30 on the chassis. For added security, the catch 66 also has a peg 74 above the hook formation 72 which engages in a hole 76 in the horizontal rail 30.

The arrangements for connecting the body 10 to the rail 30 on the left-hand side of the chassis 14 are similar and will not be described in detail.

In order to remove the body 10 from the chassis 14, it is merely necessary to grip handles 78 on opposite sides on the body 10 while depressing the catches 66 with the middle finger of each hand. The body 10 can then be lifted clear of the chassis 14. When it is to be replaced, the oblique abutment surfaces 44, 46 and 54, 56 guide the body 10 into correct alignment with the chassis 14 and the springs 68 urge the catches 66 into their engaged positions.

The perambulator body 10 can be replaced by a pushchair body (not shown).

## Claims

1. A child transporter having a body (10), a chassis (14) and a latch mechanism for detachably securing the body (10) to the chassis (14), the chassis (14) including a pair of parallel rails (30) on which the body (10) is supported and the latch mechanism comprising two latch members (66) on opposite sides of the body (10), each latch member (66) being adapted to engage with a respective one of the parallel rails (30), characterised in that each rail (30) carries a pair of spaced upwardly facing oblique abutment surfaces (44, 46) which are inclined in opposite directions, the body (10) carries four downwardly facing oblique abutment surfaces (54, 56) each positioned to abut against a respective one of said upwardly facing abutment surfaces (44, 46), and a respective latch member (66) is positioned to releasably couple the body (10) to a corresponding rail (30) at a location between the abutment surfaces thereon (44, 46).

2. A child transporter according to claim 1, wherein each latch member comprises a catch (66) which is pivotally mounted on the body (10) and has a detent formation (72, 74) for engagement with the corresponding rail (30).

3. A child transporter according to claim 2, wherein the detent formation comprises a hook formation (72) shaped to engage with the bottom edge of the rail (30).

4. A child transporter according to claim 2 or 3, wherein the detent formation comprises a projection (74) adapted to engage in a hole (76) on a side face of the rail (30).

5. A child transporter according to claim 2, 3 or 4, wherein the catch (66) is biassed into its engaged position by a spring (68).

## Patentansprüche

1. Kindertransportgerät mit einem Aufbau (10), einem Fahrgestell (14) und einem Verriegelungsmechanismus zum lösbaren Befestigen des Aufbaus (10) an dem Fahrgestell (14), wobei das Fahrgestell (14) ein Paar parallele Schienen (30) enthält, auf denen der Aufbau (10) gelagert ist, und der Verriegelungsmechanismus zwei Verriegelungsglieder (66) auf einander abgewandten Seiten des Aufbaus (10) aufweist, von denen jedes Verriegelungsglied (66) derart ausgebildet ist, daß es mit einer zugehörigen der parallelen Schienen (30) in Eingriff tritt, dadurch gekennzeichnet, daß jede Schiene (30) ein Paar voneinander beabstandete und schräg nach oben weisende Auflageflächen (44, 66) besitzt, die in entgegengesetzte Richtung geneigt sind, der Aufbau (10) vier nach unten weisende schräge Anlageflächen (54, 56) trägt, die jeweils derart positioniert sind, daß sie zur Anlage an einer der nach oben weisenden Auflageflächen (44, 46) gelangen, und ein zugehöriges Verriegelungsglied (66) derart angeordnet ist, daß es den Aufbau (10) mit einer zugehörigen Schiene (30) an einer Stelle zwischen den daran befindlichen Auflageflächen (44, 46) koppelt.

2. Kindertransportgerät nach Anspruch 1, bei dem jedes Verriegelungsglied eine Klinke (66) aufweist, die verschwenkbar an dem Aufbau (10) gelagert ist, und außerdem ein Sperrglied (72, 74) für den Eingriff mit der zugehörigen Schiene (30) besitzt.

3. Kindertransportgerät nach Anspruch 2, bei dem das Sperrglied eine hakenförmige Ausbildung (72) aufweist, die derart geformt ist, daß sie mit dem Bodenrand der Schiene (30) in Eingriff tritt.

4. Kindertransportgerät nach Anspruch 2 oder 3, bei dem das Sperrglied einen Vorsprung (34) aufweist, der in ein Loch (76) einer Seitenfläche der Schiene (30) eingreift.

5. Kindertransportgerät nach Anspruch 2, 3 oder 4 bei dem die Klinke (66) von einer Feder (68) in ihre Eingriffsstellung vorgespannt ist.

## Revendications

1. Une voiture d'enfant comprenant une nacelle (10), un châssis (14) et un mécanisme de verrouillage pour fixer de manière amovible la nacelle (10) sur le châssis (14), le châssis (14) comprenant une paire de rails parallèles (30) sur lesquels repose la nacelle (10) et le mécanisme de verrouillage comprenant deux organes de verrouillage (66) sur les côtés opposés de la nacelle (10), chaque organe de verrouillage (66) étant agencé pour s engager sur l'un des rails parallèles respectif (30), caractérisée en ce que chaque rail (30) est pourvu d'une paire de surfaces de butée obliques espacées, tournées vers le haut (44, 46) qui sont inclinées dans des directions opposées, la nacelle (10) comprenant quatre surfaces de butée obliques tournées vers le bas (54, 56), chacune d'elles étant positionnée pour venir en butée contre l'une desdites surfaces de butée tournées vers le haut respective (44, 46), et un organe de verrouillage respectif (66) est positionné pour accoupler de manière amovible la nacelle (10) sur un rail correspondant (30) dans une position entre les surfaces de butée (44, 46) de celui-ci.

2. Une voiture d'enfant selon la revendication 1, dans laquelle chaque organe de verrouillage comprend un verrou (66) qui est monté à rotation sur la nacelle (10) et pourvu d'un bossage formant dispositif d'encliquetage (72, 74) s'engageant en prise sur le rail correspondant (30).

3. Une voiture d'enfant selon la revendication 2, dans laquelle le bossage formant dispositif d'encliquetage comprend un bossage en forme de crochet (72), agencé pour s'engager avec le bord inférieur du rail (30).

4. Une voiture d'enfant selon la revendication 2 ou 3, dans laquelle le bossage formant dispositif d'encliquetage comprend une saillie (74) adaptée pour s'engager dans un trou (76) d'une face latérale du rail (30).

5. Une voiture pour enfant selon la revendication 2, 3 ou 4, dans lequel l'organe de verrouillage (66) est sollicité dans sa position d'engagement par un ressort (68).
